Europäisches Patentamt

European Patent Office

Office européen des brevets

(19)

(11)    **EP 1 182 652 B1**

(12)                    **EUROPEAN PATENT SPECIFICATION**

(45) Date of publication and mention
of the grant of the patent:
**06.10.2004 Bulletin 2004/41**

(51) Int Cl.⁷: **G11B 7/095**

(21) Application number: **01306193.2**

(22) Date of filing: **18.07.2001**

(54) **Apparatus and method of compensating for disturbance in optical recording/reproducing apparatus and optical recording medium drive servo system using the apparatus and method**

Vorrichtung und Verfahren zur Kompensation von Störungen in einem optischen Aufzeichnungs-/-Wiedergabegerät, und Servosystem für optische Aufzeichnungsmedien unter Anwendung dieser Vorrichtung und dieses Verfahrens

Dispositif et procédé pour la compensation de perturbations, et système d'asservissement pour des supports d'enregistrement optique utilisant ce dispositif et ce procédé

(84) Designated Contracting States:
**DE FR GB IT NL**

(30) Priority: **26.08.2000 KR 2000049866**

(43) Date of publication of application:
**27.02.2002 Bulletin 2002/09**

(73) Proprietor: **SAMSUNG ELECTRONICS CO., LTD.**
**Suwon-City, Kyungki-do (KR)**

(72) Inventors:
• **Cho, Seong-il**
**Guro-gu, Seoul (KR)**
• **Seo, Joong-eon**
**Uiwang-si, Gyeonggi-do (KR)**
• **Jeon, Jin-hoon**
**Suwon-si, Gyeonggi-do (KR)**
• **Jung, Soo-yul**
**Gunpo-si, Gyonggi-do (KR)**

(74) Representative: **Chugg, David John et al**
**Appleyard Lees,**
**15 Clare Road**
**Halifax, West Yorkshire HX1 2HY (GB)**

(56) References cited:
**EP-A- 0 875 887        EP-A- 1 014 366**
**US-A- 5 949 605        US-A- 5 952 804**
**US-A- 6 141 175        US-B1- 6 236 536**

**Description**

The present invention relates to the compensation of disturbance in an optical recording/reproducing apparatus, and to an optical recording medium drive servo system using the apparatus and method.

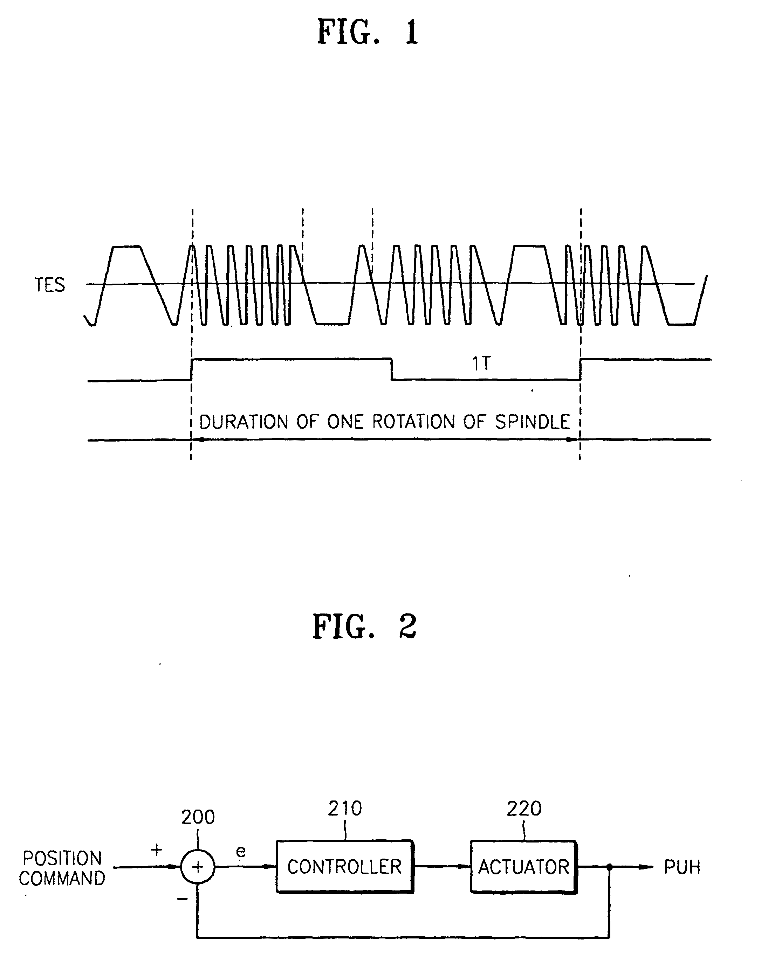

Figure 1 shows an example of a tracking error signal generated due to the eccentricity of an optical recording medium. Eccentricity occurring in an optical recording medium is due to the inconsistency of the rotation shaft of spindle for rotating a disk with the center of the track of a disk. In an optical recording medium drive system, the eccentricity of an optical recording medium has served as an important periodic disturbance factor, and its influence increases with an increase in the speed multiple. An accurate track following cannot be accomplished without compensation of the eccentricity. Accordingly, a conventional system has utilized various eccentricity compensation methods.

Figure 2 is a block diagram of a pickup head (PUH) position control system in a typical optical recording/reproducing apparatus. The PUH position control system receives a position command for directing a pickup head (not shown) to be positioned at a desired location. A signal representing the actual position of an actuator 220 of an optical recording medium drive for moving a pickup head is fed back in a negative direction and added to a position command signal in an adder 200. An error signal **e** output from the adder 200 is applied to a controller 210. The controller 210 performs a predetermined algorithm for compensating for the error signal **e**, and outputs a compensated signal to the actuator 220. The actuator 220 moves the pickup head (not shown) in response to the compensated signal received from the controller 210. These operations are repeated, and thus the position of the pickup head is adjusted. However, this control system cannot deal with a disturbance such as a large eccentricity.

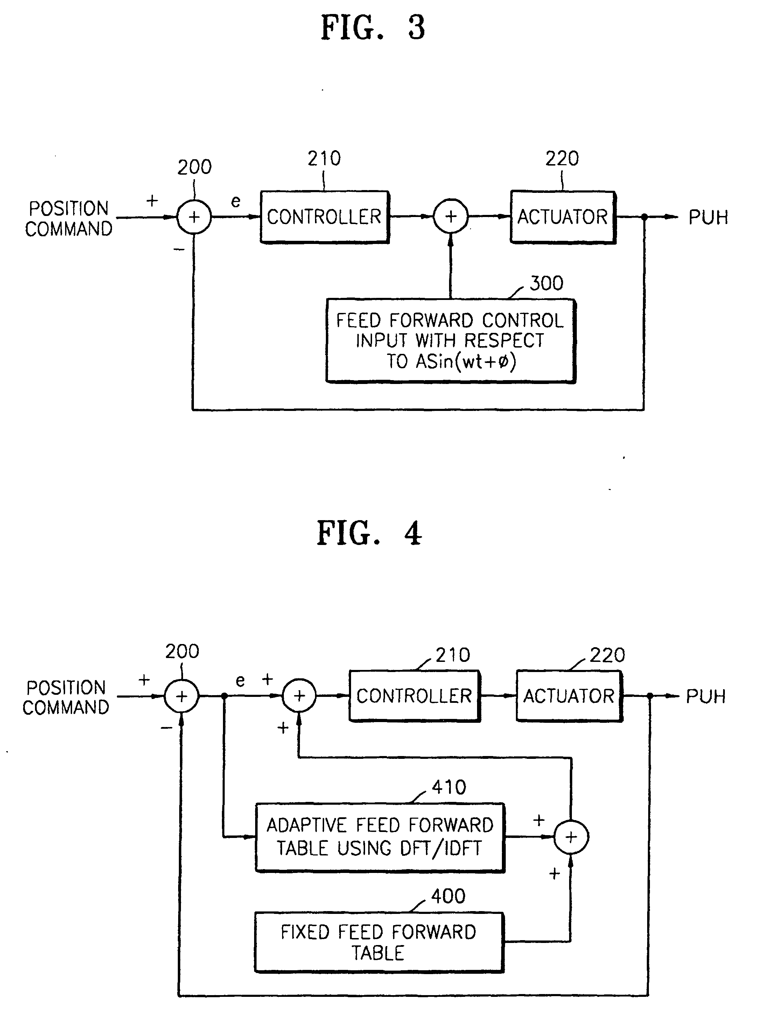

Figure 3 is a block diagram of an embodiment of a conventional PUH position control system in which a routine for performing disturbance compensation is added to the control system of Figure 2. In this system, a compensation routine 300 is performed on the assumption that a perfect sine wave $A\sin(\omega t+\psi)$ having an eccentricity of A, a disk rotation frequency $\omega$, and an eccentricity phase $\psi$ is an eccentricity signal. This compensation method is disclosed in U.S. Patent No. 5,892,742. In the operation of the system of Figure 3, a feed-forward control input is calculated from an error waveform, as shown in Figure 1, before control of tracking starts. That is, the size of the eccentricity is determined by the number of track errors generated during one rotation of a spindle over a track (i.e., during a cycle) shown in Figure 1, and the phase of eccentricity is determined by a spindle index reference signal representing one rotation and a delay time at which the period of a track error is greatest. The thus-calculated feed-forward control input is added to the output of the controller 210 of Figure 3 to accomplish track error compensation including the compensation of eccentricity. This disturbance compensation method is very simply performed and so it can be easily applied. However, this disturbance compensation method is an open-loop control method which does not consider the response characteristics of an existing servo (actuator) control system. There is a limit in the performance of the disturbance compensation method since periodic disturbances including eccentricity are not perfect sine waves.

Figure 4 is a block diagram of another embodiment of a conventional PUH position control system in which a routine for performing disturbance compensation is added to the control system of Figure 2. The system of Figure 4 is disclosed in U.S. Patent No. 5,550,685, and is applied to hard disk drive systems. In this control system, first, a fixed feed-forward control input is obtained using a track error signal and stored in a table 400 prior to starting control. Then, upon control, errors generated due to disturbances is compensated using the stored control input. This control system also includes a separate adaptive feed-forward control unit 410 in preparation for changes in characteristics of repeatable runout (RRO) caused by external factors during operation of a drive system. A discrete Fourier transform (DFT) and an inverse discrete Fourier transform (IDFT) are sequentially performed to extract a specific frequency component from a position error signal PES, thereby obtaining a signal with a specific frequency component. The obtained specific frequency component signal is added to the error input of an existing servo control loop. In this way, error compensation control can be accomplished. The system of Figure 4 is complicated since it accomplishes error compensation control in consideration of the entire closed-loop response characteristics, but can be considered a more effective disturbance compensation system than Figure 3. However, the system of Figure 4 considers only disturbances of a specific frequency component rather than disturbances of all frequency components actually present in the control region of a disk drive system, and it is difficult to cope with changes in cycle such as variations in the speed multiple.

EP 0875887 relates to a reduction of an error caused by a shock. The reduction of error is effected by a learning process. EP 1014366 relates to a storage apparatus for obtaining a control signal to suppress a positional deviation of a repetitive disturbance such as a medium eccentricity by a learning control and performing a feed-forward control.

Therefore, in a periodic system such as a disk drive system, calculations of a control input in consideration of all frequency components within a control region is necessary for a high-performance disturbance compensation operation. Also, new disturbance compensation methods and apparatuses are required to effectively cope with changes in system cycle caused by a variation of the speed multiple and a variation of a control mode.

With a view to solve or reduce the above problem, an aim of embodiments of the present invention is to provide an apparatus and method of compensating for disk disturbances in consideration of periodic disturbances of all frequency components within the control region of an optical recording medium drive servo system and variations in the rotation speed multiple of the optical recording medium in an optical recording/reproducing apparatus.

According to a first aspect, the present invention provides an optical recording medium drive servo system of an optical recording/reproducing apparatus, the system including an actuator for moving the position of a head for recording data on a recording medium or reproducing the recorded data from the recording medium, an error detector for detecting the difference between the reference position on the recording medium and the actual position of the head, that is, a position error, a compensator for receiving a value from the error detector and producing a value for driving the actuator, a first memory for storing a control input for compensating for the position error of the actuator due to a periodic disturbance such as eccentricity, a second memory for converting the content of the first memory according to phase and storing the converted content, a timing controller for generating addresses for the first memory and addresses for the second memory according to phase, and an adder for applying the content of the first or second memory together with the output of the compensator to the actuator.

The first memory preferably stores a control input for compensating for the position error generated during a determined rotation period of time through repeated operations of updating the value previously stored in the first memory unit with the sum of the position error filtered value and the values of previously stored in the first memory unit, the operations being repeated until the position error is at or below a predetermined value.

A filtering coefficient is preferably determined so that the sum is converged as the number of repetitions increases.

Preferably, the timing controller generates addresses corresponding to the number of sampling of position errors generated during one rotation cycle using the speed (FG) of a spindle motor for rotating the recording medium for the first memory and also generates an address corresponding to the number of rising edges and falling edges of the FG generated during one rotation cycle for the second memory.

The optical recording medium drive servo system may further include an interpolator for performing interpolation to restore for a value between the compensation control inputs stored in addresses of the second memory.

The optical recording medium drive servo system may further include a multiplexer for outputting the control input value of the first memory to the adder during a process in which control input values are stored in the first memory until the values are converged to a predetermined value, and outputting the control input value of the interpolator after the process.

According to a second aspect, the present invention also provides a disturbance compensation module using learning control, for generating a control input for compensating for track position errors due to a periodic disturbance such as eccentricity occurring on an optical recording medium, in an optical recording medium drive servo system of an optical recording/reproducing apparatus, the module including a first filter for filtering the track position errors, a memory which has addresses, the number of which corresponds to the number of sampling of the track position errors, and stores a control input value for compensating for a cycle of track position errors in a corresponding address of the addresses, a second filter for filtering the control input values stored in the memory, and an adder for adding the output of the first filter to the output of the second filter and applying the result of the addition to the memory, wherein the track position errors are compensated using the control input values stored in the memory, and, if the compensated result does not satisfy a predetermined reference, the above-described members operate again, and the control input values of the memory are updated whenever the members operate again.

The disturbance compensation may further include a second memory for storing final control input values for compensating for a cycle of track errors generated during a cycle at a pulse edge timing generated during the track cycle after the final control input values are stored in the first memory, and an interpolator for interpolating the control input values stored in the second memory after the learning control process is completed.

In a third aspect, the present invention also provides a disturbance compensation module using learning control, for generating a control input for compensating for track position errors due to a periodic disturbance such as eccentricity occurring on an optical recording medium, the module attached to an optical recording medium drive servo system of an optical recording/reproducing apparatus, the module including a first filter for filtering the track position errors, a first memory which has addresses, the number of which corresponds to the number of sampling of the track position errors, and stores control input values for compensating for a cycle of track position errors in the addresses, a second filter for filtering the control input values stored in the first memory, an adder for adding the output of the first filter to the output of the second filter and applying the result of the addition to the first memory, a second memory for storing final control input values for compensating for track errors generated during a cycle at a pulse edge timing generated during the track cycle when the final control input values are stored in the first memory, and an interpolator for interpolating the control input values stored in the second memory, wherein the track position errors are compensated using the control input values stored in the first memory, and, if the compensated result does not satisfy a predetermined reference, the first and second filters, the adder and the first memory operate again, and the control input values of the first memory are updated whenever the members operate again, and wherein a track position control is made using the output from the interpolator after the learning control is completed.

The disturbance compensation module may further include a multiplexer for outputting a control input value stored in the first memory to obtain an error-compensation control input value for a track position control during a cycle due to a disturbance and selecting the output of the interpolator after all control input values for disturbance compensation during the cycle are obtained and stored in the second memory.

The present invention also provides a disturbance compensation method using learning control, of generating a control input for compensating for track position errors due to a periodic disturbance such as eccentricity occurring on an optical recording medium, this method including (a) determining whether a control input for disturbance compensation is required, (b) obtaining a feed-forward control input for compensating for a cycle of track position errors in an optical recording medium drive servo system, if it is determined in step (a) that a control input is required, (c) converting the feed-forward control input obtained in step (b) into a control input value depending on a spindle and storing the converted control input value, and (d) compensating for the track position errors generated due to the disturbance using the control input values obtained in step (c).

In the step (a), a track position error depending on the amount of a periodic disturbance such as the eccentricity of a disk is measured prior to starting control of tracking in an optical recording medium drive servo system, and, if the magnitude of the disturbance is measured equal to or greater than a predetermined value, it is determined that a disturbance compensation control input is required.

In the step (b), assuming that one rotation of a track is referred to as a control process, when a k-th attempted control input result is $u_k(t)$ and a track position error measured in this case is $e_k(t)$, a (k+1)th attempted control input result $u_{k+1}(t)$ is calculated as shown in Equation 1:

$$U_{k+1}(s) = P(s)U_k(s) + Q(s)E_k(s)$$

wherein $U_{k+1}(s)$, $U_k(s)$ and $E_k(s)$ denote the Laplace transforms of $u_{k+1}(t)$, $u_k(t)$ and $e_k(t)$, respectively, and $P(s)$ and $Q(s)$ denote functions representative of a predetermined filter characteristic determined so that $U_{k+1}(s)$ is converged, and a final periodic feed-forward control input is obtained by repetitive operations of Equation 1.

Preferably, the feed-forward control input obtained in step (b) is adapted to compensate for track position errors, until the final feed-forward control input values are obtained, and the control input converted according to phase in step (c) is adapted for track position error compensation after the final feed-forward control input for track position errors generated during a cycle is obtained.

After the step (c), there may be further provided the step of interpolating the stored values and taking the interpolated values to a disturbance compensation control input.

For a better understanding of the invention, and to show how embodiments of the same may be carried into effect, reference will now be made, by way of example, to the accompanying diagrammatic drawings in which:

Figure 1 illustrates an example of a tracking error signal generated due to the eccentricity of an optical recording medium drive servo system;

Figure 2 is a block diagram of a pickup head position control system of a typical optical recording/reproducing apparatus;

Figure 3 is a block diagram of an embodiment of a conventional pickup head position control system obtained by adding a disturbance compensating routine to the control system of Figure 2;

Figure 4 is a block diagram of another embodiment of a conventional pickup head position control system obtained by adding a disturbance compensating routine to the control system of Figure 2;

Figure 5 is a block diagram of an optical recording medium drive servo system of an optical recording/reproducing apparatus according to an embodiment of the present invention;

Figure 6 is a block diagram of a disturbance compensation module using learning control according to an embodiment of the present invention;

Figure 7A illustrates sampling points with respect to a periodic control input waveform during a track rotation cycle in Figure 6 and points corresponding to pulse edges representative of the phases of a spindle which rotates over a track in Figure 6;

Figure 7B shows an example of a control input table which is stored in the first and second memory units of Figures 5 and 6, respectively, corresponding to the points of Figure 7A;

Figure 8 is a flowchart illustrating a disturbance compensation method using learning control, according to embodiments of the present invention; and

Figure 9 shows an example of a change in the speed multiple of an optical recording medium and a change in the waveform of an error compensation control input corresponding to the change in the speed multiple of an optical recording medium.

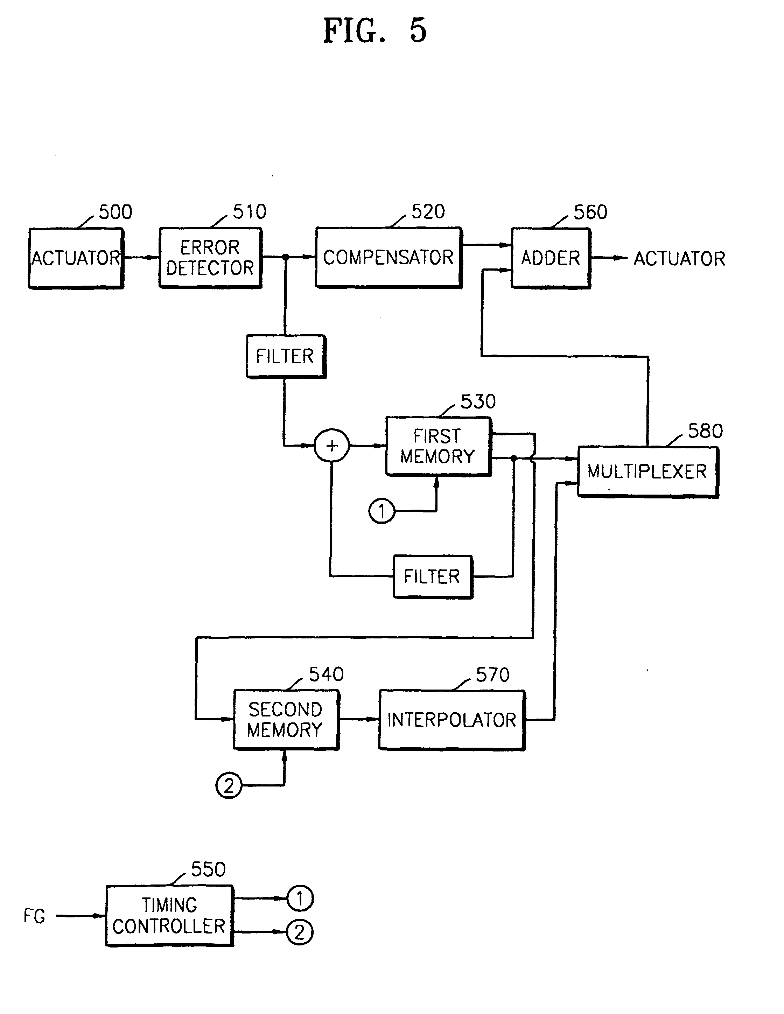

Referring to Figure 5, an optical recording medium drive servo system of an optical recording/reproducing apparatus according to the present invention includes an actuator 500, an error detector 510, a compensator 520, a first memory 530, a second memory 540, and an adder 560.

The actuator 500 moves the position of a head (for example, a pickup head) for recording data on an optical recording medium or reproducing data therefrom. The error detector 510 detects the difference (position error) between the reference position on the recording medium and the actual position of the head. The compensator 520 receives the output value of the error detector 510 and produces an actuator driving value by applying a predetermined algorithm for reducing the position error. The first memory 530 stores a control input for compensating for the position error for one period made by the actuator 500 due to a periodic disturbance such as an eccentricity on an optical recording medium. The first memory 530 stores a control input(s) for compensating for the position error generated for a determined rotation period of time through repeated operations of updating the value previously stored in the first memory unit 530 with the sum of the position error filtered value and the values of previously stored in the first memory unit 530 , the operations being repeated until the position error is at or below a predetermined value. Determination of the most appropriate control input through the above-described repetitive summing of a previously-generated control input and a resultant error compensation result (which is indicated as a position error) can be referred to as a learning control. As the number of repetitions increases, a filtering coefficient must be determined so that the sums are converged. The second memory 540 converts the content stored in the first memory 530 according to phase and stores the converted content after the learning control is completely performed, in order to uniformly use the control input value in the first memory 530 regardless of the number of rotations of a spindle depending on a variation in the reproduction speed multiple of a recording medium. A timing controller 550 generates the addresses of the first and second memories 530 and 540 according to phase. That is, the timing controller 550 generates an address corresponding to the number of sampling of position errors generated during one rotation cycle, using the frequency generator pulse (FG) of a spindle motor for rotating a recording medium, and outputs the generated address to the first memory 530. The timing controller 550 also generates an address corresponding to the number of rising edges and falling edges of the FG generated during one rotation cycle and outputs the generated address to the second memory 540. The adder 560 adds the output of the first or second memory 530 or 540 to the output of the compensator 520 and provides the resulting sum to the actuator 500. The optical recording medium drive servo system can further include an interpolator 570 for interpolating the compensation control inputs stored in neighboring addresses of the second memory 540 before the control input value of the second memory 540 is applied to the adder 560. The optical recording medium drive servo system can further include a multiplexer 580 for outputting the control input value of the first memory 530 to the adder 560 during a learning control process in which control input values are stored in the first memory 530 and for outputting the control input value of the interpolator 570 after the learning control process is completed.

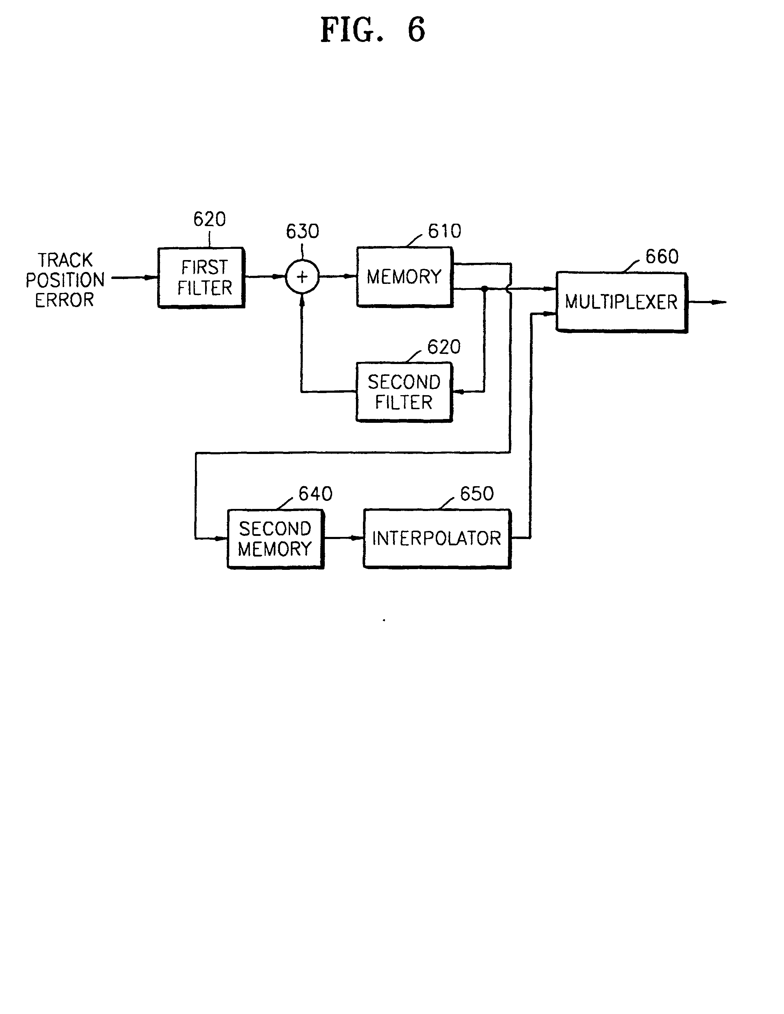

Figure 6 is a block diagram of a disturbance compensation module using learning control according to the present invention. In this disturbance compensation module using learning control, a control input for compensating for a cycle of track position errors due to periodic disturbance such as eccentricity occurring on an optical recording medium, is added to the output of the existing position error compensation controller 210 (see Figure 2) of an optical recording medium drive servo system of an optical recording/reproducing apparatus.

This disturbance compensation module using learning control, includes a first filter 600, a memory 610, a second filter 620 and an adder 630. The first filter 600 receives and filters a track position error. The memory 610 has addresses, the number of which corresponds to the number of sampling of track position errors, and stores a control input value for compensating for a cycle of track position errors in a corresponding address of the addresses. Until the track position error input to the first filter 600 is at or below a predetermined value, the memory 610 repeats operations of updating a value previously stored in the memory 610 with the sum of a value obtained by filtering a track position error by the first filter 600 and a value obtained by filtering the value stored in the memory 610 by the second filter 620. Here, the summation is made by the adder 630. Thus, the memory 610 stores a control input for compensating for position errors generated during a determined rotation period of time. The most appropriate control input is determined by taking the values of the above-described repetitive summing of a previously-generated control input and a resultant error compensation result (which is indicated as a position error), which can be referred to as a learning control. As the number of repetitions increases, the filtering coefficients of the first and second filters 600 and 620 are determined so that the sums are converged.

The disturbance compensation module of Figure 6 can further include a second memory 640 and an interpolator 650 to output a control input value for disturbance compensation against a change in the speed multiple of an optical recording medium. When final control input values for compensating for track errors generated during a cycle are stored in the memory 610, a second memory 640 stores the final control input values in response to a pulse edge timing generated during a track rotation cycle. The interpolator 650 interpolates the stored control inputs to restore the control input values between the pulse edges not stored in the second memory 640.

The disturbance compensation module of Figure 6 can further include a multiplexer 660 for outputting a control input value of the memory 610 in the middle of a learning control process in which control input values are stored in the memory 610 and outputting the resulting value of the interpolator 650 after the learning control process is completed.

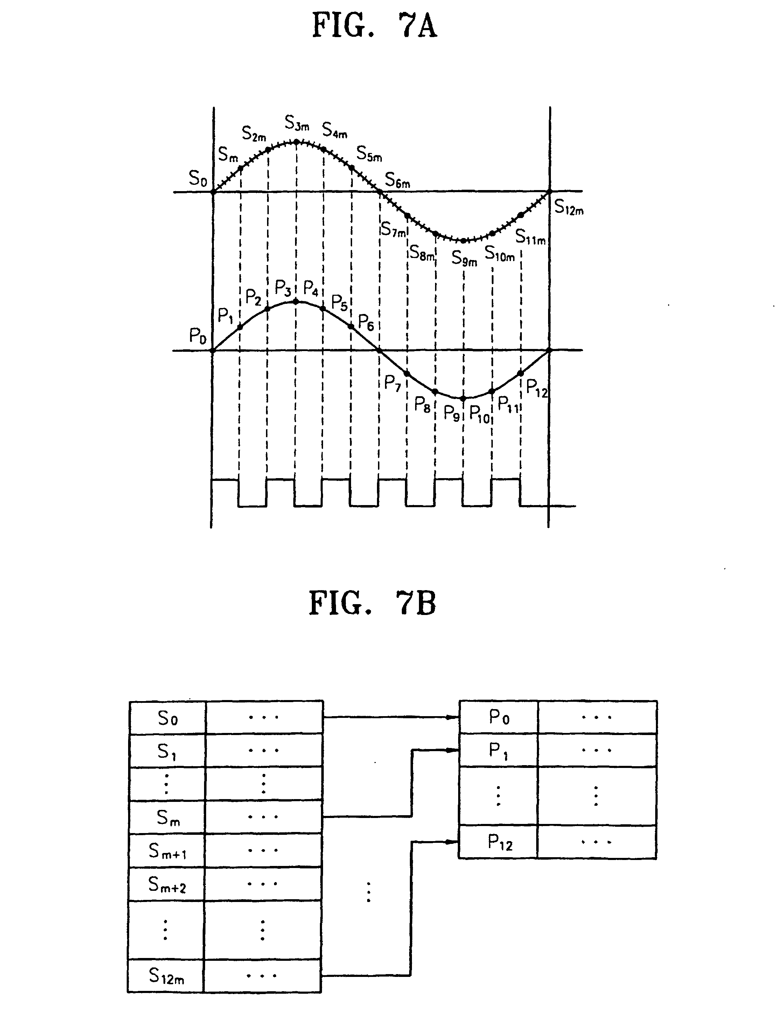

Figure 7A illustrates sampling points ($s_0$ through $s_{12m}$) on the waveform of a periodic control input during a track rotation cycle in Figure 6 and points ($P_0$ through $P_{12}$) corresponding to FG pulse edges representative of the phases of a spindle which rotates over a track. There are 0 to m sampling points within a pulse edge.

Figure 7B shows an example of control input tables which are in the first and second memory units 530 and 540 of Figure 5 in synchronization with the points of Figure 7A.

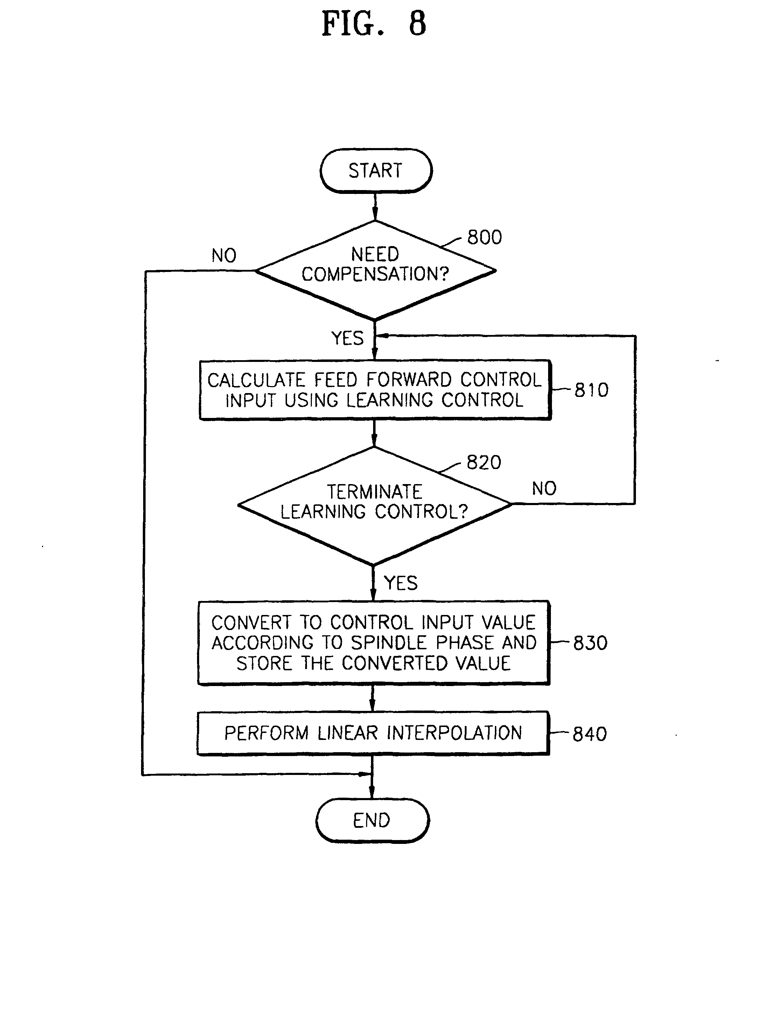

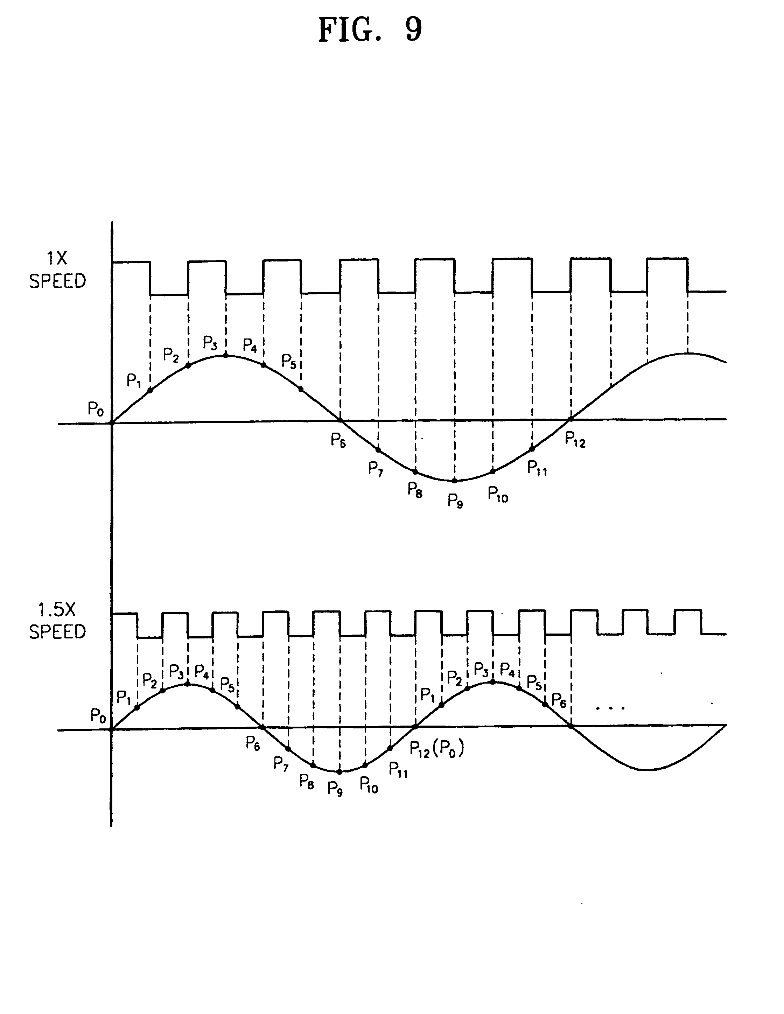

Figure 8 is a flowchart illustrating a disturbance compensation method using learning. In the disturbance compensation method using learning control in which a learning-use optical recording/reproducing apparatus generates a control input for compensating for a cycle of track position errors due to a periodic disturbance such as eccentricity occurring on an optical recording medium, first, it is determined whether a disturbance compensation control input is required, in step 800. The magnitude of a periodic disturbance such as the eccentricity of a disk is measured prior to starting control of tracking in an optical recording medium drive servo system. If the magnitude of the track position error is equal to or greater than a predetermined value, it is determined that a disturbance compensation control input is required. If the optical recording medium is an optical disk, a disk drive system performs focusing, and the amount of eccentricity of the disk is measured prior to tracking. If the amount of eccentricity is smaller than the predetermined reference, the magnitude of disturbance actually occurring in a control system is small enough to be sufficiently compensated for with an existing controller alone, so that a learning control is not required. On the other hand, if the amount of eccentricity is equal to or greater than the predetermined reference, disturbance compensation just by an existing controller alone is not possible, so that a feed-forward control input must be previously calculated using a learning control algorithm. If it is determined that a control input is required for disturbance compensation, a feed-forward control input for compensating for track position errors during one cycle is calculated, in step 810. Assuming that a control for one rotation of a track is referred to as a control process, when a k-th attempted control input result is $u_k(t)$ and a track position error measured in this case is $e_k(t)$, a (k+1)th attempted control input result $U_{k+1}(t)$ is calculated as shown in Equation 1. A final periodic feed-forward control input is obtained by repeating Equation 1 and stored in the first memory 530 of Figure 5 and the memory 610 of Figure 6. In the calculation of a feed-forward control input, a compensation control input value is obtained by a repetitive learning of a position error. After the learning control step 820 is completed, the calculated feed-forward control input is converted into a control input value depending on the phase of a spindle and stored, in step 830. This conversion is a conversion of control input values depending on a cycle of track rotation time into spacial control input values depending on the phase of rotation of a track. In an actual disk drive system, the rotation speed of a spindle which determines the rotation of a disk may vary according to a constant linear velocity (CLV) control or a variation in the speed multiple of reproduction of a disk. This disk drive system cannot directly use the control input values calculated in step 820, so the control inputs must be obtained depending on a variation in the speed multiple through a new learning process. Thus, in step 830, the calculated feed-forward control input is converted into a control input value depending on the phase of a spindle in order to effectively compensate for the eccentricity due to a variation in the reproduction the speed multiple of a disk, that is, a periodic disturbance, without performing a new learning process, and the converted control input value is used in the case of a variation in the speed multiple of reproduction of a disk. Figure 9 shows an example of error compensation control input values depending on a variation in the speed multiple of an optical recording medium using the result obtained in step 830. When there is a variation in the speed multiple of a disk, the rotation phase is constant, but the rotation frequency varies, so that the result obtained in step 830 can be applied without change in accordance with a variation in frequency. Since the control input value is produced at a time when an edge of a frequency generator (FG) pulse occurs, the control input value between edges is restored by linear interpolation, in step 840. Therefore, continuous control input values can be output.

According to embodiments of the present invention, a periodic disturbance component including the eccentricity can be rapidly and effectively compensated for using a previously-learned control result regardless of the variation in cycle such as a variation in the speed of a spindle due to a variation in the reproduction speed of a recording medium.

## Claims

1. An optical recording medium drive servo system of an optical recording/reproducing apparatus, the system comprising:

   an actuator (500) for moving the position of a head for recording data on a recording medium or reproducing the recorded data from the recording medium;

   an error detector (510) for detecting the difference between the reference position on the recording medium and the actual position of the head, that is, a position error;

   a compensator (520) for receiving a value from the error detector and producing a value for driving the actuator;

   characrerized in that,
   a first memory (530) for storing a control input for compensating for the position error of the actuator due to a periodic disturbance such as eccentricity;
   a second memory (540) for converting the content of the first memory according to phase and storing the converted content;
   a timing controller (550) for generating addresses for the first memory and addresses for the second memory according to phase; and
   an adder (560) for applying the content of the first or second memory together with the output of the compensator to the actuator.

2. The optical recording medium drive servo system of claim 1, wherein the first memory (530) stores a control input for compensating for the position error generated during a determined rotation period of time through repeated operations of updating the value previously stored in the first memory unit (530) with the sum of the position error filtered value and the values of previously stored in the first memory unit (530), the operations being repeated until the position error is at or below a predetermined value.

3. The optical recording medium drive servo system of claim 2, wherein a filtering coefficient is determined so that the sum is converged as the number of repetitions increases.

4. The optical recording medium drive servo system of claim 1, 2 or 3, wherein the timing controller (550) generates addresses corresponding to the number of sampling of position errors generated during one rotation cycle using the speed (FG) of a spindle motor for rotating the recording medium for the first memory and also generates an address corresponding to the number of rising edges and falling edges of the FG generated during one rotation cycle for the second memory.

5. The optical recording medium drive servo system of claim 1, 2, 3 or 4, further comprising an interpolator (570) for performing interpolation to restore for a value between the compensation control inputs stored in addresses of the second memory (540).

6. The optical recording medium drive servo system of claim 5, further comprising a multiplexer (580) for outputting the control input value of the first memory (530) to the adder (560) during a process in which control input values are stored in the first memory (530) until the track position errors are converged to a predetermined value, and outputting the control input value of the interpolator after the process.

7. A disturbance compensation module using learning control, for generating a control input for compensating for track position errors due to a periodic disturbance such as eccentricity occurring on an optical recording medium, in an optical recording medium drive servo system of an optical recording/reproducing apparatus, the module comprising:

   a first filter (600) for filtering the track position errors;

   a memory (610) which has addresses, the number of which corresponds to the number of sampling of the track position errors, and stores a control input value for compensating for a cycle of track position errors in a corresponding address of the addresses;

   a second filter (620) for filtering the control input values stored in the memory; and

   an adder (630) for adding the output of the first filter to the output of the second filter and applying the result of the addition to the memory,

   wherein the track position errors are compensated using the control input values stored in the memory, and, if the compensated result does not satisfy a predetermined reference, the above-described members operate again, and the control input values of the memory are updated whenever the members operate again.

8. The disturbance compensation module of claim 7, further comprising:

   a second memory (640) for storing final control input values for compensating for a cycle of track errors generated during a cycle at a pulse edge timing generated during the track cycle after the final control input values are stored in the memory; and

an interpolator (650) for interpolating the control input values stored in the second memory,

wherein a track position control is made using the control inputs output from the interpolator when the tracks on an optical recording medium is controlled.

9. The disturbance compensation module of claim 7 or 8, wherein the filter coefficients of the first and second filters (600, 620) are determined so that track position error values and control input values are converged as the frequency of learning increases.

10. The disturbance compensation module of claim 8 or 9, further comprising a multiplexer (660) for outputting a control input value stored in the first memory (610) to obtain an error-compensation control input value for a track position control during a cycle due to a disturbance and selecting the output of the interpolator after all control input values for disturbance compensation during the cycle are obtained and stored in the first memory.

11. A disturbance compensation method using learning control, of generating a control input for compensating for track position errors due to a periodic disturbance such as eccentricity occurring on an optical recording medium, this method comprising:

(a) determining whether a control input for disturbance compensation is required;

(b) obtaining a feed-forward control input for compensating for a cycle of track position errors on an optical recording medium, if it is determined in step (a) that a control input is required;

(c) converting the feed-forward control input obtained in step (b) into a control input value depending on the phase of a track driving spindle and storing the converted control input value; and

(d) compensating for the track position errors generated due to the disturbance using the control input values obtained in step (c).

12. The disturbance compensation method of claim 11, wherein, in the step (a), a track position error depending on the amount of a periodic disturbance such as the eccentricity of a disk is measured prior to controlling tracking in an optical recording medium and, if the magnitude of the track position error is measured equal to or greater than a predetermined value, it is determined that a disturbance compensation control input is required.

13. The disturbance compensation method of claim 11 or 12, wherein, in the step (b), assuming that one rotation of a track is referred to as a control process, when a k-th attempted control input result is $u_k(t)$ and a track position error measured in this case is $e_k(t)$, a (k+1)th attempted control input result $u_{k+1}(t)$ is calculated as shown in Equation 1:

$$U_{k+1}(s) = P(s)U_k(s) + Q(s)E_k(s)$$

wherein $U_{k+1}(s)$, $U_k(s)$ and $E_k(s)$ denote the Laplace transforms of $u_{k+1}(t)$, $u_k(t)$ and $e_k(t)$, respectively, and P(s) and Q(s) denote functions representative of a predetermined filter characteristic determined so that $U_{k+1}(s)$ is converged, and a final periodic feed-forward control input is obtained by repetitive operations of Equation 1.

14. The disturbance compensation method of claim 13, wherein the feed-forward control input obtained in step (b) is adapted to compensate for track position errors, until the final feed-forward control input values are obtained, and the control input converted according to phase in step (c) is adapted for a track position error compensation after the final feed-forward control input for track position errors generated during a cycle is obtained.

15. The disturbance compensation method of claim 11, after the step (c), further comprises the step of interpolating the stored values and taking the interpolated values to a disturbance compensation control input.

**Patentansprüche**

1. Servosystem für den Antrieb eines optischen Aufzeichnungsmediums einer optischen Aufzeichnungs-/Wiedergabevorrichtung, wobei das System umfasst:

ein Stellglied (500), das die Position eines Kopfes zum Aufzeichnen von Daten auf ein Aufzeichnungsmedium oder zum Wiedergeben der aufgezeichneten Daten von dem Aufzeichnungsmedium verschiebt;

einen Fehlerdetektor (510), der die Differenz zwischen der Bezugsposition auf dem Aufzeichnungsmedium und der tatsächlichen Position des Kopfes, d.h. einen Positionsfehler, erfasst;

einen Kompensator (520), der einen Wert von dem Fehlerdetektor empfängt und einen Wert zum Ansteuern des Stellgliedes erzeugt;

**gekennzeichnet durch:**

einen ersten Speicher (530), der einen Steuereingang zum Kompensieren des Positionsfehlers des Stellgliedes aufgrund einer periodischen Störung, wie beispielsweise Exzentrizität, speichert;

einen zweiten Speicher (540), der den Inhalt des ersten Speichers entsprechend der Phase umwandelt und den umgewandelten Inhalt speichert;

eine Zeitsteuerung (550), die Adressen für den ersten Speicher und Adressen für den zweiten Speicher entsprechend der Phase generiert; und

einen Addierer (560), der den Inhalt des ersten oder des zweiten Speichers zusammen mit dem Ausgang des Kompensators an das Stellglied anlegt.

2. Servosystem für den Antrieb eines optischen Aufzeichnungsmediums nach Anspruch 1, wobei der erste Speicher (530) einen Steuereingang speichert, um den Positionsfehler, der während eines vorgegebenen Drehzeitraums generiert wird, über wiederholte Vorgänge des Aktualisierens des zuvor in der ersten Speichereinheit (530) gespeicherten Wertes mit der Summe des positionsfehler-gefilterten Wertes und den zuvor in der ersten Speichereinheit (530) gespeicherten Werte zu kompensieren, wobei die Vorgänge wiederholt werden, bis der Positionsfehler auf oder unter einem vorgegebenen Wert liegt.

3. Servosystem für den Antrieb eines optischen Aufzeichnungsmediums nach Anspruch 2, wobei ein Filterkoeffizient so bestimmt wird, dass die Summe konvergiert wird, wenn die Anzahl von Wiederholungen zunimmt.

4. Servosystem für den Antrieb eines optischen Aufzeichnungsmediums nach Anspruch 1, 2 oder 3, wobei die Zeitsteuerung (550) Adressen, die der Anzahl von Abtastungen von Positionsfehlern entsprechen, die während eines DrehZyklus unter Verwendung der Geschwindigkeit (FG) eines Spindelmotors zum Drehen des Aufzeichnungsmediums generiert werden, für den ersten Speicher generiert und des Weiteren eine Adresse, die der Anzahl von steigenden Flanken und fallenden Flanken der FG entspricht, die während Drehzyklus erzeugt werden, für den zweiten Speicher generiert.

5. Servosystem für den Antrieb eines optischen Aufzeichnungsmediums nach Anspruch 1, 2, 3 oder 4, das des Weiteren einen Interpolator (570) umfasst, der Interpolation zum Wiederherstellen für einen Wert zwischen den Kompensations-Steuereingängen durchführt, die an Adressen des zweiten Speichers (540) gespeichert sind.

6. Servosystem für den Antrieb eines optischen Aufzeichnungsmediums nach Anspruch 5, das des Weiteren einen Multiplexer (580) umfasst, der den Steuer-Eingangswert des ersten Speichers (530) an den Addierer während eines Prozesses ausgibt, in dem Steuer-Eingangswerte in dem ersten Speicher (530) gespeichert werden, bis die Spurpositionsfehler zu einem vorgegebenen Wert konvergiert sind, und den Steuer-Eingangswert des Interpolators nach dem Prozess ausgibt.

7. Störungskompensationsmodul in einem Servosystem zum Antreiben eines optischen Aufzeichnungsmediums einer optischen Aufzeichnungs-/Wiedergabevorrichtung, das Lemsteuerung verwendet, um einen Steuereingang zum Kompensieren von Spurpositionsfehlern aufgrund einer periodischen Störung wie beispielsweise Exzentrizität, die auf einem optischen Aufzeichnungsmedium auftritt, zu erzeugen, wobei das Modul umfasst:

ein erstes Filter (600), das den Spurpositionsfehler fiftert;

einen Speicher (610), der Adressen hat, deren Anzahl der Anzahl von Abtastungen der Spurpositionsfehler entspricht und der einen Steuer-Eingangswert zum Kompensieren eines Zyklus von Spurpositionsfehlern an einer entsprechenden Adresse der Adressen speichert;

ein zweites Filter (620), das die in dem Speicher gespeicherten Steuer-Eingangswerte filtert; und

einen Addierer (630), der den Ausgang des ersten Filters zu dem Ausgang des zweiten Filters addiert und das Ergebnis der Addition an den Speicher anlegt,

wobei die Spurpositionsfehler unter Verwendung der in dem Speicher gespeicherten Steuer-Eingangswerte kompensiert werden, und, wenn das kompensierte Ergebnis einem vorgegebenen Bezug nicht entspricht, die oben beschriebenen Elemente erneut in Funktion treten und die Steuer-Eingangswerte des Speichers immer dann aktualisiert werden, wenn die Elemente wieder in Funktion treten.

**8.** Störungskompensationsmodul nach Anspruch 7, das des Weiteren umfasst:

einen zweiten Speicher (640), der abschließende Steuer-Eingangswerte zum Kompensieren eines Zyklus von Spurtehlern speichert, die während eines Zyklus zu einer Pulskantenzeit generiert werden, die während des Spurzyklus generiert wird, nachdem die abschließenden Steuereingangswerte in dem Speicher gespeichert sind; und

einen Interpolator (650), der die in dem zweiten Speicher gespeicherten Steuer-Eingangswerte interpoliert,

wobei eine Spurpositionssteuerung unter Verwendung der von dem Interpolator ausgegebenen Steuereingänge ausgeführt wird, wenn die Spuren auf einem optischen Aufzeichnungsmedium gesteuert werden.

**9.** Störungskompensationsmodul nach Anspruch 7 oder 8, wobei die Filterkoeffizienten des ersten und des zweiten Filters (600, 620) so bestimmt werden, dass Spurpositions-Fehlerwerte und Steuer-Eingangswerte konvergiert werden, wenn die Frequenz des Lemens zunimmt.

**10.** Störungskompensationsmodul nach Anspruch 8 oder 9, das des Weiteren einen Multiplexer (660) umfasst, der einen in dem ersten Speicher (610) gespeicherten Steuer-Eingangswert ausgibt, um einen Fehlerkompensations-Steuer-Eingangswert für eine Spurpositionssteuerung während eines Zyklus aufgrund einer Störung zu ermitteln, und den Ausgang des Interpolators auswählt, nachdem alle Steuer-Eingangswerte für die Störungskompensation während des Zyklus ermittelt und in dem ersten Speicher gespeichert sind.

**11.** Störungskompensationsverfahren, das Lernsteuerung verwendet, zum Erzeugen eines Steuereingangs zum Kompensieren von Spurpositionsfehlern aufgrund einer periodischen Störung, wie beispielsweise Exzentrizität, die auf einem optischen Aufzeichnungsmedium auftritt, wobei dieses Verfahren umfasst:

a) Feststellen, ob ein Steuereingang für Störungskompensation erforderlich ist;

b) Ermitteln eines Vorwärtssteuerungs-Eingangs zum Kompensieren eines Zyklus von Spurpositionsfehlern auf einem optischen Aufzeichnungsmedium, wenn in Schritt a) bestimmt wird, dass ein Steuereingang erforderlich ist;

c) Umwandeln des Vorwärtssteuerungs-Eingangs, der in Schritt b) ermittelt wird, in einen Steuer-Eingangswert in Abhängigkeit von der Phase einer Spurantriebsspindel und Speichern des umgewandelten Steuer-Eingangswertes; und

d) Kompensieren der aufgrund der Störung generierten Spurpositionsfehler unter Verwendung der in Schritt c) ermittelten Steuer-Eingangswerte.

**12.** Störungskompensationsverfahren nach Anspruch 11, wobei in dem Schritt a) ein Spurpositionsfehler in Abhängigkeit von dem Betrag einer periodischen Störung, wie beispielsweise der Exzentrizität einer Platte, gemessen wird, bevor Spurführung auf einem optischen Aufzeichnungsmedium gesteuert wird, und, wenn gemessen wird, dass der Betrag des Spurpositionsfehlers einem vorgegebenen Wert entspricht oder größer ist dieser, bestimmt wird, dass ein Störungskompensations-Steuereingang erforderlich ist.

**13.** Störungskompensationsverfahren nach Anspruch 11 oder 12, wobei in dem Schritt b), wenn angenommen wird, dass eine Drehung einer Spur als ein Steuerprozess bezeichnet wird, wenn ein k-tes Steuerungsversuchs-Eingangsergebnis $u_k(t)$ ist und ein in diesem Fall gemessener Spurpositionsfehler $e_k(t)$ ist, ein (k+1)-tes Steuerungsversuchs-Eingangsergebnis $u_k+1$ (t) wie in Gleichung 1 dargestellt berechnet wird:

$$U_{k+1}(s) = P(s)U_k(s) + Q(s)E_k(s)$$

wobei $U_{k+1}(s)$, $U_k(s)$ und $E_k(s)$ jeweils die Laplace-Transformationen von $u_{k+1}(t)$, $u_k(t)$ und $e_k(t)$ bezeichnen und P(s) sowie Q(s) Funktionen bezeichnen, die repräsentativ für eine vorgegebenen Filter-Kennlinie sind, die so bestimmt wird, dass $U_{k+1}(s)$ konvergiert wird, und ein abschließender periodischer Vorwärtssteuerungs-Eingang durch wiederholte Durchführungen von Gleichung 1 ermittelt wird.

**14.** Störungskompensationsverfahren nach Anspruch 13, wobei der Vorwärtssteuerungs-Eingang, der in Schritt b) ermittelt wird, so eingerichtet ist, dass Spurpositionsfehler kompensiert werden, bis die abschließenden Vorwärtssteuerungs-Eingangswerte ermittelt sind, und der Steuerungseingang, der entsprechend der Phase in Schritt c) umgewandelt wird, für eine Spurpositionsfehler-Kompensation eingerichtet ist, nachdem der abschließende Vorwärtssteuerungs-Eingang für Spurpositionsfehler, die während eines Zyklus generiert werden, ermittelt ist.

15. Störungskompensationsverfahren nach Anspruch 11, das nach dem Schritt c) des Weiteren den Schritt des Interpolierens der gespeicherten Werte und des Verwendens der interpolierten Werte als einen Störungskompensations-Steuereingang umfasst.

## Revendications

1. Servo-système d'entraînement de support d'enregistrement optique d'un dispositif d'enregistrement/ lecture optique, le système comportant :

   un actionneur (500) pour déplacer la position d'une tête en vue d'enregistrer des données sur un support d'enregistrement ou de lire des données enregistrées à partir du support d'enregistrement,
   un détecteur d'erreurs (510) pour détecter la différence entre la position de référence sur le support d'enregistrement et la position réelle de la tête, c'est-à-dire une erreur de position,
   un compensateur (520) pour recevoir une valeur en provenance du détecteur d'erreurs et produire une valeur pour attaquer l'actionneur,

   **caractérisé en ce que**,
   une première mémoire (530) pour mémoriser une entrée de commande en vue de compenser l'erreur de position de l'actionneur du fait d'une perturbation périodique telle qu'une excentricité,
   une seconde mémoire (540) pour convertir le contenu de la première mémoire conformément à la phase et mémoriser le contenu converti,
   un contrôleur de cadencement (550) pour générer des adresses pour la première mémoire et des adresses pour la seconde mémoire conformément à la phase, et
   un additionneur (560) pour appliquer le contenu de la première ou de la seconde mémoire conjointement avec la sortie du compensateur à l'actionneur.

2. Servo-système d'entraînement de support d'enregistrement optique selon la revendication 1, dans lequel la première mémoire (530) mémorise une entrée de commande pour compenser l'erreur de position générée pendant une période de temps de rotation déterminée via des opérations répétées consistant à mettre à jour la valeur précédemment mémorisée dans la première unité de mémoire (530) à l'aide de la somme de la valeur filtrée d'erreur de position et des valeurs précédemment mémorisées dans la première unité de mémoire (530), les opérations étant répétées jusqu'à ce que l'erreur de position soit égale à une valeur prédéterminée ou inférieure à celle-ci.

3. Servo-système d'entraînement de support d'enregistrement optique selon la revendication 2, dans lequel un coefficient de filtrage est déterminé de sorte que la somme converge lorsque le nombre de répétitions augmente.

4. Servo-système d'entraînement de support d'enregistrement optique selon la revendication 1, 2 ou 3, dans lequel le contrôleur de cadencement (550) génère des adresses correspondant au nombre d'échantillonnages d'erreurs de position générées pendant un cycle de rotation en utilisant la vitesse (FG) d'un moteur à broche afin de mettre en rotation le support d'enregistrement pour la première mémoire et génère également une adresse correspondant au nombre de flancs avant et de flancs arrière de la vitesse FG générée pendant un cycle de rotation pour la seconde mémoire.

5. Servo-système d'entraînement de support d'enregistrement optique selon la revendication 1, 2, 3 ou 4, comportant en outre un interpolateur (570) pour effectuer une interpolation afin de rétablir une valeur entre les entrées de commande de compensation mémorisées dans des adresses de la seconde mémoire (540).

6. Servo-système d'entraînement de support d'enregistrement optique selon la revendication 5, comportant en outre un multiplexeur (580) pour délivrer en sortie la valeur d'entrée de commande de la première mémoire (530) à l'additionneur (560) pendant un processus au cours duquel des valeurs d'entrée de commande sont mémorisées dans la première mémoire (530) jusqu'à ce que les erreurs de position de piste convergent vers une valeur prédéterminée, et délivrer en sortie la valeur d'entrée de commande de l'interpolateur après le processus.

7. Module de compensation de perturbation utilisant une commande d'apprentissage, pour générer une entrée de commande en vue de compenser des erreurs de position de piste du fait d'une perturbation périodique telle qu'une excentricité survenant sur un support d'enregistrement optique, dans un serve-système d'entraînement de support d'enregistrement optique d'un dispositif d'enregistrement/ lecture optique, le module comportant :

un premier filtre (600) pour filtrer les erreurs de position de piste,

une mémoire (610) qui a des adresses, leur nombre correspondant au nombre d'échantillonnages des erreurs de position de piste, et mémorise une valeur d'entrée de commande en vue de compenser un cycle d'erreurs de position de piste dans une adresse correspondante des adresses,

un second filtre (620) pour filtrer les valeurs d'entrée de commande mémorisées dans la mémoire, et

un additionneur (630) pour ajouter la sortie du premier filtre à la sortie du second filtre et appliquer le résultat de l'addition à la mémoire,

dans lequel les erreurs de position de piste sont compensées en utilisant les valeurs d'entrée de commande mémorisées dans la mémoire, et, si le résultat compensé ne satisfait pas à une référence prédéterminée, les opérations décrites ci-dessus sont à nouveau exécutées, et les valeurs d'entrée de commande de la mémoire sont mises à jour à chaque fois que les opérations sont à nouveau exécutées.

8. Module de compensation de perturbation selon la revendication 7, comportant en outre :

une seconde mémoire (640) pour mémoriser des valeurs d'entrée de commande finales en vue de compenser un cycle d'erreurs de suivi de piste générées pendant un cycle à un cadencement de flanc d'impulsion généré pendant le cycle de suivi de piste après que les valeurs d'entrée de commande finales aient été mémorisées dans la mémoire, et

un interpolateur (650) pour interpoler les valeurs d'entrée de commande mémorisées dans la seconde mémoire,

dans lequel une commande de position de piste est exécutée en utilisant les entrées de commande délivrées en sortie par l'interpolateur lorsque les pistes sur un support d'enregistrement optique sont commandées.

9. Module de compensation de perturbation selon la revendication 7 ou 8, dans lequel les coefficients de filtre des premier et second filtres (600, 620) sont déterminés de sorte que des valeurs d'erreurs de position de piste et des valeurs d'entrée de commande convergent lorsque la fréquence d'apprentissage augmente.

10. Module de compensation de perturbation selon la revendication 8 ou 9, comportant en outre un multiplexeur (660) pour délivrer en sortie une valeur d'entrée de commande mémorisée dans la première mémoire (610) afin d'obtenir une valeur d'entrée de commande de compensation d'erreurs pour une commande de position de piste pendant un cycle du fait d'une perturbation et sélectionner la sortie de l'interpolateur une fois que toutes les valeurs d'entrée de commande pour une compensation de perturbation pendant le cycle sont obtenues et mémorisées dans la première mémoire.

11. Module de compensation de perturbation utilisant une commande d'apprentissage, consistant à générer une entrée de commande pour compenser des erreurs de position de piste du fait d'une perturbation périodique telle qu'une excentricité survenant sur un support d'enregistrement optique, ce procédé comportant les étapes consistant à :

(a) déterminer si une entrée de commande pour une compensation de perturbation est nécessaire,

(b) obtenir une entrée de commande prédictive pour compenser un cycle d'erreurs de position de piste sur un support d'enregistrement optique, s'il est déterminé à l'étape (a) qu'une entrée de commande est nécessaire,

(c) convertir l'entrée de commande prédictive obtenue à l'étape (b) en une valeur d'entrée de commande en fonction de la phase d'une broche d'entraînement de piste et mémoriser la valeur d'entrée de commande convertie, et

(d) compenser les erreurs de position de piste générées du fait de la perturbation en utilisant les valeurs d'entrée de commande obtenues à l'étape (c).

12. Procédé de compensation de perturbation selon la revendication 11, dans lequel, à l'étape (a), une erreur de position de piste en fonction de la quantité d'une perturbation périodique telle que l'excentricité d'un disque est mesurée avant de commander le suivi de piste dans un support d'enregistrement optique, et, si la grandeur de l'erreur de position de piste mesurée est égale ou supérieure à une valeur prédéterminée, il est déterminé qu'une entrée de commande de compensation de perturbation est nécessaire.

13. Procédé de compensation de perturbation selon la revendication 11 ou 12, dans lequel, à l'étape (b), en supposant qu'une rotation d'une piste est désignée en tant que processus de commande, lorsqu'un $k^{ème}$ résultat d'entrée de commande tentée est $u_k(t)$ et qu'une erreur de position de piste mesurée dans ce cas est $e_k(t)$, un $(k+1)^{ème}$ résultat d'entrée de commande tentée $u_{k+1}(t)$ est calculé comme représenté dans l'Equation 1 :

$$u_{k+1}(s) = P(s)U_k(s) + Q(s)E_k(s)$$

dans laquelle $U_{k+1}$ (s) , $U_k$ (s) et $E_k$ (s) désignent les transformées de Laplace de $u_{k+1}$ (t) , $u_k(t)$ et $e_k$ (t) , respectivement, et P(s) et Q(s) désignent des fonctions représentatives d'une caractéristique de filtre prédéterminé déterminée de sorte que $U_{k+1}$ (t) converge, et une entrée de commande prédictive périodique finale est obtenue par l'intermédiaire d'opérations répétitives de l'Equation 1.

**14.** Procédé de compensation de perturbation selon la revendication 13, dans lequel l'entrée de commande prédictive obtenue à l'étape (b) est adaptée pour compenser des erreurs de position de piste, jusqu'à ce que les valeurs d'entrée de commande prédictive finales soient obtenues, et l'entrée de commande convertie conformément à la phase à l'étape (c) est adaptée pour une compensation d'erreurs de position de piste après que l'entrée de commande prédictive finale pour des erreurs de position de piste générées pendant un cycle ait été obtenue.

**15.** Procédé de compensation de perturbation selon la revendication 11, après l'étape (c), comportant en outre l'étape consistant à interpoler les valeurs mémorisées et à appliquer les valeurs interpolées à une entrée de commande de compensation de perturbation.

# FIG. 1

TES

1T

DURATION OF ONE ROTATION OF SPINDLE

# FIG. 2

POSITION
COMMAND

+

200

−

e

210

CONTROLLER

220

ACTUATOR

PUH

# FIG. 3

# FIG. 4

# FIG. 5

# FIG. 6

EP 1 182 652 B1

FIG. 7A

FIG. 7B

18

# FIG. 8

```
                    ┌─────────┐
                    │  START  │
                    └─────────┘
                         │
                         ▼
                        800
          NO     ◇ NEED        ◇
      ┌──────────  COMPENSATION? ───
      │           ◇            ◇
      │                │
      │               YES
      │                │◄──────────────────┐
      │                ▼                    │
      │   ┌────────────────────────────┐    │
      │   │ CALCULATE FEED FORWARD     │   810
      │   │ INPUT USING LEARNING CONTROL│───
      │   └────────────────────────────┘    │
      │                │                    │
      │                ▼                    │
      │               820                   │
      │        ◇                  ◇   NO    │
      │        ◇  TERMINATE        ◇────────┘
      │        ◇  LEARNING CONTROL? ◇
      │                │
      │               YES
      │                ▼
      │   ┌────────────────────────────┐
      │   │ CONVERT TO CONTROL INPUT   │
      │   │ VALUE ACCORDING TO SPINDLE │  830
      │   │ PHASE AND STORE THE        │───
      │   │ CONVERTED VALUE            │
      │   └────────────────────────────┘
      │                │
      │                ▼
      │   ┌────────────────────────────┐
      │   │ PERFORM LINEAR INTERPOLATION│  840
      │   └────────────────────────────┘
      │                │
      └────────────────┤
                       ▼
                  ┌─────────┐
                  │   END   │
                  └─────────┘
```

# FIG. 9